# EUROPEAN PATENT APPLICATION

(11) **EP 4 821 792 A1**
(43) Date of publication of application: **14.10.2026**
(21) Application number: 23960750.0
(22) Date of filing: 05.12.2023
(51) Int. Cl.: B62D 1/185

(54) **STEERING COLUMN DEVICE**

(71) Applicant: JTEKT CORPORATION, Kariya-shi, Aichi 448-8652 (JP)
(72) Inventor: FUJISHIRO, Daiki, Kariya-shi, Aichi 448-8652 (JP); SAKUDA, Masayoshi, Kariya-shi, Aichi 448-8652 (JP)
(74) Representative: Winter, Brandl - Partnerschaft mbB
(86) International application number: PCT/JP2023/043477
(87) International publication number: WO 2025/120735

(57) **Abstract**

A steering column device includes a backlash suppression mechanism (23) configured to suppress backlash of a column tube (22) within a housing (21). The backlash suppression mechanism (23) includes a first member (71) including an outer bottom face (81) that faces an inner bottom face (65) of a projecting portion (33) of the housing (21) in a first direction, and a first friction face (82) that is situated on an opposite side from the outer bottom face (81) in a first direction, a second member (72) including a support face (91) that supports an outer peripheral face of the column tube (22) and a second friction face (92) that is situated on an opposite side from the support face (91) in the first direction and that also comes into contact with the first friction face (82), and a biasing member (73) that biases the first member (71) toward a biasing side. The first friction face (82) and the second friction face (92) are inclined faces that are inclined so as to be farther away from the column tube (22) the farther toward the biasing side.

## Description

### TECHNICAL FIELD

The present disclosure relates to a steering column device.

### BACKGROUND ART

Conventionally, there is a steering column device that is capable of adjusting a position of a steering wheel in a vehicle front-rear direction (hereinafter referred to as "telescopic position"). This type of steering column device includes a housing that is supported by a vehicle body, a column tube that is accommodated within the housing so as to be movable in an axial direction, and a column shaft that is rotatably supported within the column tube and to which the steering wheel is linked. When adjusting the telescopic position, the column tube moves together with the column shaft and the steering wheel in the axial direction.

The column tube is thus movable in the axial direction, and accordingly there is a concern that there may be backlash of the column tube in a case in which an external force is applied to the steering wheel due to an operation by a driver, for example. Therefore, Patent Document 1, for example, discloses a steering column device including a pressing mechanism that is disposed between a housing and a column tube. In this steering column device, the pressing mechanism utilizes biasing force of a disc spring to press the column tube against an inner peripheral face of the housing, thereby suppressing backlash of the column tube within the housing.

### Related Art Documents

### Patent Documents

Patent Document 1: Japanese Unexamined Patent Application Publication No. 2018-52208 (JP 2018-52208 A)

### SUMMARY OF THE INVENTION

### Problem to be Solved by the Invention

In the steering column device according to the aforementioned Patent Document 1, in order to effectively suppress backlash of the column tube, there is a need to increase the biasing force of the disc spring, thereby increasing the force with which the pressing mechanism presses down on the column tube. However, increasing the force pressing down on the column tube will increase sliding resistance between the column tube and the housing, thereby making it difficult to adjust telescopic position.

### Means for Solving the Problem

A steering column device according to one aspect of the present disclosure includes a shaft to which a steering wheel is fixed, and a steering column that rotatably supports the shaft. The steering column includes a housing supported by a vehicle body, a column tube that is accommodated in the housing so as to be movable in an axial direction, and a backlash suppression mechanism configured to suppress backlash of the column tube within the housing. A straight line that intersects with an axis of the column tube is a first straight line, and a straight line that intersects with the first straight line is a second straight line. The housing includes a tubular portion in which the column tube is accommodated, and a projecting portion that projects to an outward side that is a one side, from the tubular portion along the first straight line and in which the backlash suppression mechanism is accommodated. The projecting portion includes an inner bottom face facing in an inward side that is another side along the first straight line. The backlash suppression mechanism includes a first member including an outer bottom face facing the inner bottom face in a first direction that is a direction along the first straight line, and a first friction face situated on an opposite side of the outer bottom face in the first direction, a second member including a support face that supports an outer peripheral face of the column tube, and a second friction face that is situated on an opposite side of the support face in the first direction and that also comes into contact with the first friction face, and a biasing member that biases the first member toward a biasing side that is a one side along the second straight line. The first friction face and the second friction face are inclined faces that are inclined so as to be farther away from the column tube the farther toward the biasing side along the second straight line.

### BRIEF DESCRIPTION OF THE DRAWINGS

[FIG. 1] FIG. 1 is a sectional view taken along an axial direction of a steering column device according to an embodiment.
[FIG. 2] FIG. 2 is a perspective view of the steering column device in FIG. 1, as viewed from an upper left of a vehicle.
[FIG. 3] FIG. 3 is a perspective view of the steering column device in FIG. 1, as viewed from an upper right of the vehicle.
[FIG. 4] FIG. 4 is an exploded perspective view of a backlash suppression mechanism provided in the steering column device in FIG. 1.
[FIG. 5] FIG. 5 is a cross-sectional view of a vicinity of the backlash suppression mechanism taken along line V-V in FIG. 1.
[FIG. 6] FIG. 6 is a sectional view of the vicinity of the backlash suppression mechanism, taken along the axial direction of the steering column device in FIG. 1.
[FIG. 7] FIG. 7 is a sectional view of a vicinity of a backlash suppression mechanism, taken along the axial direction of a steering column device according to a modification.

### MODES FOR CARRYING OUT THE INVENTION

An embodiment of a steering column device will be described below with reference to the drawings.

### (Overall Configuration)

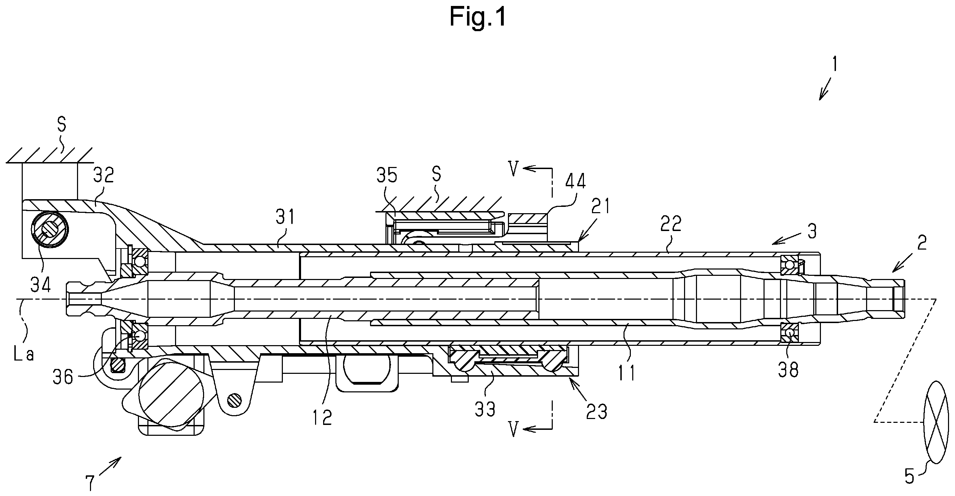

As illustrated in FIG. 1, a steering column device 1 includes a column shaft 2 and a steering column 3 that rotatably accommodates the column shaft 2. The column shaft 2 and the steering column 3 are disposed on an axis La that is common therebetween. The steering column device 1 is installed in a vehicle such that the axis La generally follows a vehicle front-rear direction.

In the following description, a left side in FIG. 1 is a front side of the vehicle, a right side in FIG. 1 is a rear side of the vehicle, and orientations expressed in terms such as "front", "rear", "up", "down", "left", "right", and so forth, are defined with respect to the vehicle. The term "tubular" as used in the present specification can refer to any shape that is generally tubular, and also includes a tubular shape formed by combining a plurality of parts and a tubular shape including a cut or the like in a portion thereof, such as in a C-shape. The term "tubular" shape encompasses, circles, ellipses, and polygons with sharp or rounded corners as viewed in an axial direction, but is not limited thereto.

A steering wheel 5 is linked to a rear-side end portion of the column shaft 2. An intermediate shaft, omitted from illustration, is linked to a front-side end portion of the column shaft 2. The intermediate shaft is linked to steered wheels via a rack and pinion mechanism that is omitted from illustration.

The steering column device 1 is configured such that a position of the steering wheel 5 in an up-down direction (hereinafter referred to as "tilt position") and a position of the steering wheel 5 in the front-rear direction (hereinafter referred to as "telescopic position") are adjustable, as illustrated in FIGS. 1 to 3. The steering column device 1 according to the present embodiment includes a tilt actuator 6 that adjusts the tilt position, and a telescopic actuator 7 that adjusts the telescopic position. This enables the steering column device 1 to electrically adjust the tilt position and the telescopic position.

More specifically, the column shaft 2 includes an upper shaft 11 and a lower shaft 12. The upper shaft 11 and the lower shaft 12 are long and tubular. **In** the present embodiment, the upper shaft 11 and the lower shaft 12 have a circular shape as viewed in the axial direction. The steering wheel 5 is linked to a rear-side end portion of the upper shaft 11. The lower shaft 12 is fitted to an inner peripheral portion of the upper shaft 11 by spline engagement. Accordingly, the upper shaft 11 is linked with the lower shaft 12 so as to be integrally rotatable therewith, and also to be movable in the axial direction relative to the lower shaft 12.

The steering column 3 includes a housing 21, a column tube 22, and a backlash suppression mechanism 23. The housing 21 is made of a metal material, for example. The housing 21 includes a tubular portion 31, a linking portion 32 that projects forward from a front-side end portion of the tubular portion 31, and a projecting portion 33 that is provided on an outer periphery of the tubular portion 31. **In** the present embodiment, an inner peripheral face of the tubular portion 31 has a circular shape or a C-shape. The linking portion 32 of the housing 21 is linked to a vehicle body S via a hinge bolt 34. A rear-side end portion of the tubular portion 31 is linked to the vehicle body S via a linking member 44 and a bracket 35, which will be described later. That is to say, the steering column 3 is linked to the vehicle body S via the hinge bolt 34 and the bracket 35. The steering column 3 is pivotable about the hinge bolt 34. The tilt position of the steering wheel 5 is changed by pivoting the steering column 3 about the hinge bolt 34.

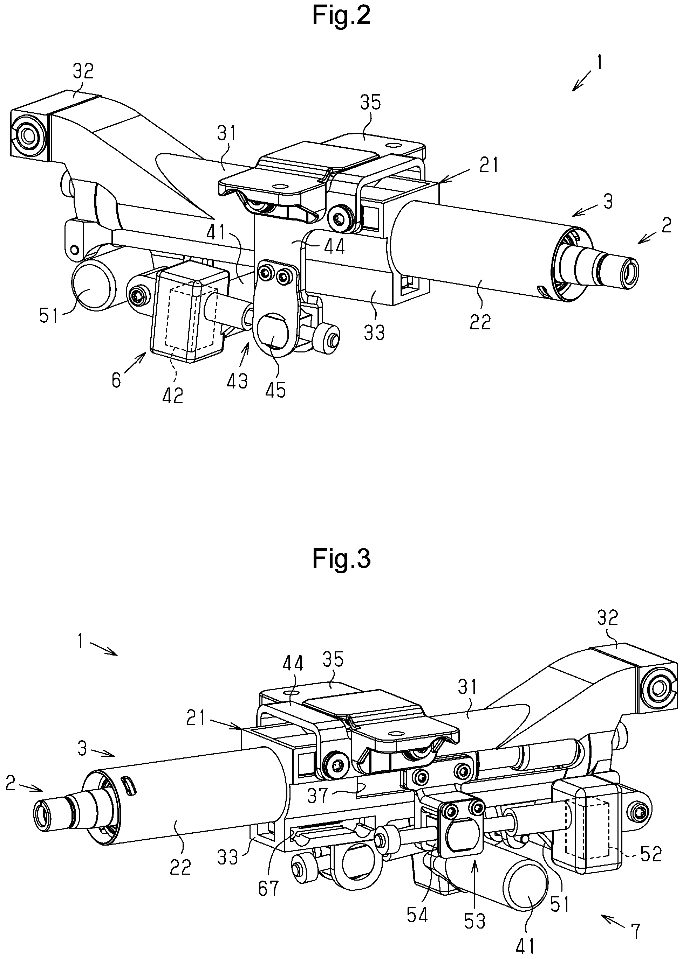

The tubular portion 31 supports the lower shaft 12 via a bearing 36 provided at an inner periphery of the front-side end portion thereof so as to be rotatable, and also to be immovable relative thereto in the axial direction. The tubular portion 31 includes an open groove 37 that passes through the tubular portion 31 in a radial direction (see FIG. 3). The open groove 37 has, for example, an oblong shape that is elongated in the axial direction of the tubular portion 31. The projecting portion 33 accommodates the backlash suppression mechanism 23 therein. The projecting portion 33 and the backlash suppression mechanism 23 will be described in detail later.

The column tube 22 is made of a metal material, for example. The column tube 22 is tubular. In the present embodiment, the column tube 22 has a circular shape. The column tube 22 supports the upper shaft 11 via a bearing 38 provided at an inner periphery of a rear-side end portion thereof so as to be rotatable and also to be immovable relative thereto in the axial direction. This enables the column tube 22 to integrally move with the upper shaft 11 in the axial direction. The column tube 22 is accommodated in the housing 21 so as to be movable in the axial direction. Moving the column tube 22 in the housing 21 in the axial direction causes the steering column 3 to telescope. At this time, the upper shaft 11 moves in the axial direction relative to the lower shaft 12 in conjunction with the movement of the column tube 22, causing the column shaft 2 to also telescope. The telescopic position of the steering wheel 5 is changed by the steering column 3 telescoping.

As illustrated in FIGS. 2 and 3, the tilt actuator 6 includes a tilt motor 41 serving as a drive source, a reducer 42, a slide mechanism 43, and the linking member 44. The reducer 42 is, for example, a worm reducer. The slide mechanism 43 is, for example, a feed screw mechanism, and includes a slider 45 that moves linearly in accordance with rotation of the tilt motor 41. The linking member 44 is pivotably supported by the bracket 35, and is also linked to the steering column 3 such that the linear movement of the slider 45 causes the steering column 3 to pivot about the hinge bolt 34. Accordingly, the tilt actuator 6 drives the tilt motor 41 to pivot the steering column 3 about the hinge bolt 34, thereby changing the tilt position.

The telescopic actuator 7 includes a telescopic motor 51 serving as a drive source, a reducer 52, and a slide mechanism 53. The reducer 52 is, for example, a worm reducer. The slide mechanism 53 is, for example, a feed screw mechanism, and includes a slider 54 that moves linearly in accordance with the rotation of the telescopic motor 51. The slider 54 is fixed to the column tube 22 via the open groove 37 of the housing 21. The column tube 22 moves integrally with the slider 54 in the axial direction, whereby the steering column 3 telescopes. Accordingly, the telescopic actuator 7 drives the telescopic motor 51 to perform telescoping of the steering column 3, thereby changing the telescopic position.

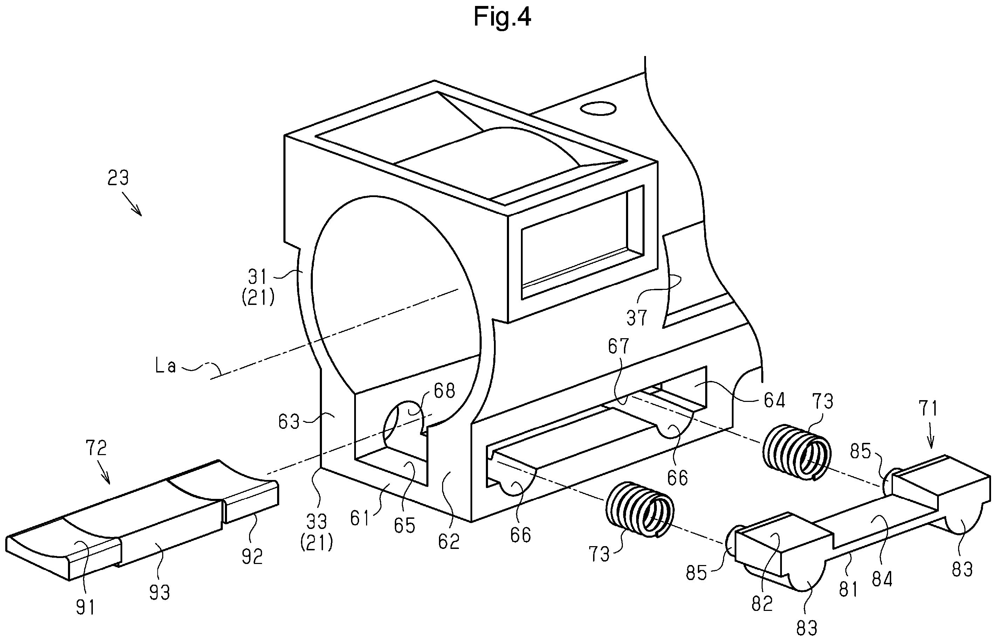

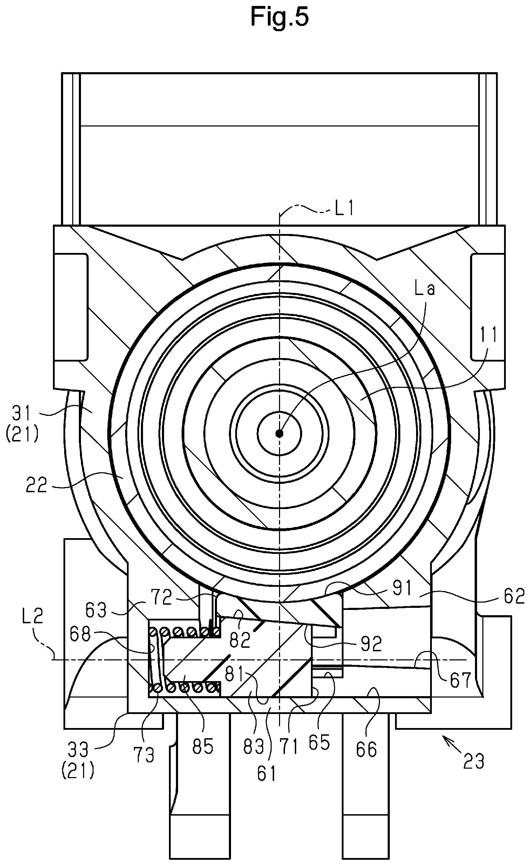

(Projecting Portion 33 and Backlash Suppression Mechanism 23) Configurations of the projecting portion 33 and the backlash suppression mechanism 23 will be described with reference to FIGS. 4 to 6. In the following, a line orthogonal to the axis La will be referred to as "first straight line L1", and a line orthogonal to the axis La and the first straight line L1 will be referred to as "second straight line L2", as illustrated in FIG. 5. Therefore, it can be said that the first straight line L1 and the second straight line L2 are both straight lines along the radial direction of the tubular portion 31. The direction along the first straight line L1 will be referred to as "first direction", and the direction along the second straight line L2 will be referred to as "second direction". One side along the first straight line L1 will be referred to as "outward side", and the other side as "inward side", and one side along the second straight line L2 will be referred to as "biasing side", and the other side as "counter-biasing side". In the present embodiment, the first straight line L1 extends generally along the up-down direction of the vehicle, and the second straight line L2 extends generally along a right-left direction of the vehicle. That is to say, the outward side faces generally to the downward side, the inward side faces generally to the upward side, the biasing side faces generally to the right side, and the counter-biasing side faces generally to the left side. In other embodiments, the first straight line L1 may extend along the right-left direction or an oblique direction of the vehicle, for example, and the second straight line L2 may extend along the up-down direction or an oblique direction of the vehicle, for example.

First, the configuration of the projecting portion 33 will be described. As illustrated in FIGS. 4 to 6, the projecting portion 33 protrudes to the outward side from the tubular portion 31. The inside of the projecting portion 33 communicates with the inside of the tubular portion 31. The projecting portion 33 is, for example, box-shaped. Specifically, the projecting portion 33 includes a bottom wall 61, a first side wall 62, a second side wall 63, and a third side wall 64. The bottom wall 61 has a rectangular plate shape, for example. The first side wall 62 extends to the inward side from an edge portion of the bottom wall 61 on the biasing side. The second side wall 63 extends to the inward side from an edge portion of the bottom wall 61 on the counter-biasing side. The third side wall 64 extends to the inward side from an edge portion of the bottom wall 61 on the front side. The first side wall 62 and the second side wall 63 face each other in the second direction. The projecting portion 33 according to the present embodiment does not include a side wall extending to the inward side from an edge portion of the bottom wall 61 on the rear side, and the inside of the projecting portion 33 is open to the rear side of the vehicle.

An inner bottom face 65 of the projecting portion 33, which is an inner side face of the bottom wall 61, faces to the inward side. In the present embodiment, the inner bottom face 65 is gradually inclined to the outward side the farther toward the rear side along the axial direction. In another embodiment, the inner bottom face 65 may be a flat face that is orthogonal to the first straight line L1. The inner bottom face 65 is provided with two first recessed portions 66. The two first recessed portions 66 are disposed spaced apart in the axial direction. Each of the first recessed portions 66 has a groove shape extending along the second straight line L2. The first recessed portions 66 of according to the present embodiment each has an arcuate shape as viewed from the second direction.

The first side wall 62 includes an insertion hole 67 passing through in the second direction. The insertion hole 67 has a rectangular shape that is long in the axial direction as viewed from the second direction. A portion that is situated on the outward side of an inner peripheral face of the insertion hole 67 protrudes slightly to the inward side as compared to the inner bottom face 65. The first recessed portions 66 extend continuously from the inner bottom face 65 to the inner peripheral face of the insertion hole 67, and open to an outer side face of the first side wall 62.

The second side wall 63 includes installation holes 68 that open to the biasing side and that also communicate with the first recessed portions 66, respectively. That is to say, the second side wall 63 is provided with two installation holes 68 spaced apart in the axial direction. Each of the installation holes 68 is, for example, a circular hole. A portion that is situated on the outward side on an inner peripheral face of each of the installation holes 68 is continuous with an inner face of the first recessed portion 66.

Next, the configuration of the backlash suppression mechanism 23 will be described. The backlash suppression mechanism 23 includes a first member 71, a second member 72 that is disposed adjacent to an inward side of the first member 71, and a plurality of biasing members 73 that biases the first member 71 toward the biasing side.

The first member 71 is made of a resin material, for example. The first member 71 has a generally rectangular plate shape. The first member 71 is disposed within the projecting portion 33 so as to be substantially parallel to the bottom wall 61. The length of the first member 71 along the second straight line L2 is shorter than the length of the inside of the projecting portion 33, i.e., the length of the inner bottom face 65 along the second straight line L2. This enables the first member 71 to move in the second direction in a state of being disposed within the projecting portion 33.

The first member 71 includes an outer bottom face 81 that faces the inner bottom face 65 of the projecting portion 33 in the first direction, and a first friction face 82 that is situated on the opposite side of the outer bottom face 81 in the first direction. The outer bottom face 81 is a flat face that is orthogonal to the first straight line L1 and that extends parallel to the axial direction. The first friction face 82 is gradually inclined to the outward side the further along the second straight line L2 toward the biasing side (see FIG. 5). That is to say, the first friction face 82 is an inclined face that is gradually inclined away from the column tube 22 the further toward the biasing side along the second straight line L2.

In the present embodiment, although the inner bottom face 65 is inclined with respect to the axial direction as described above, the outer bottom face 81 extends parallel to the axial direction, and accordingly a gap is formed between the inner bottom face 65 and the outer bottom face 81. In other embodiments, the outer bottom face 81 may be in contact with the inner bottom face 65.

The outer bottom face 81 of the first member 71 is provided with two first protruding portions 83 that are inserted into the two first recessed portions 66, respectively. That is to say, the two first protruding portions 83 are disposed spaced apart in the axial direction. Each of the first protruding portions 83 has an elongated ridge shape extending along the second straight line L2. Each of the first protruding portions 83 has a semicircular shape corresponding to the respective first recessed portion 66, as viewed from the second direction, and is fit into the first recessed portions 66. The first protruding portions 83 do not engage with the first recessed portions 66 in the second direction, but do engage therewith in the axial direction. That is to say, the first protruding portions 83 and the first recessed portions 66 are configured to allow movement of the first member 71 toward the biasing side and also to restrict movement in the axial direction.

The length of the first member 71 along the axial direction is shorter than the length of the insertion hole 67 along the axial direction, and also the length of the first member 71 along the first direction is shorter than the length of the insertion hole 67 along the first direction. Accordingly, the first member 71 can be inserted into the projecting portion 33 from the outside of the projecting portion 33 through the insertion hole 67 toward the counter-biasing side.

The first friction face 82 of the first member 71 is provided with one second recessed portion 84. The second recessed portion 84 is provided in the middle portion of the first friction face 82 in the axial direction. In other words, the first friction face 82 is divided into two parts in the axial direction. The second recessed portion 84 is a wide groove that is open on both sides in the second direction. The second recessed portion 84 in the present embodiment has a flat rectangular shape as viewed from the second direction.

The first member 71 also includes two mounting protrusions 85 that are inserted into the two installation holes 68 of the projecting portion 33, respectively. Each of the mounting protrusions 85 is cylindrical, for example. The outer diameters of the mounting protrusions 85 are smaller than the inner diameters of the installation holes 68. Each of the mounting protrusions 85 protrudes from a side face of the first member 71 facing the counter-biasing side.

The second member 72 is made of a resin material, for example. The second member 72 has a generally rectangular plate shape. The second member 72 is disposed within the projecting portion 33 so as to be substantially parallel to the first member 71. The length of the second member 72 along the second straight line L2 is shorter than the length of the inner bottom face 65 along the second straight line L2, and also is longer than the length of the first member 71 along the second straight line L2.

The second member 72 includes a support face 91 that supports an outer peripheral face of the column tube 22, and a second friction face 92 that is situated on the opposite side of the support face 91 in the first direction and that comes into contact with the first friction face 82. The support face 91 is a curved face that is curved in an arcuate shape, for example, as viewed in the axial direction. The second friction face 92 is gradually inclined to the outward side the further along the second straight line L2 toward the biasing side. That is to say, the second friction face 92 is an inclined face that is gradually inclined away from the column tube 22 the further toward the biasing side along the second straight line L2. The second friction face 92 is parallel to the first friction face 82.

The inclination angles of the first friction face 82 and the second friction face 92 with respect to the second straight line L2 are set as follows. That is to say, the inclination angles are set such that even in a case in which a large and predetermined external force acts to press the second member 72 to the outward side, the movement of the first member 71 toward the counter-biasing side is restricted by frictional force acting between the first friction face 82 and the second friction face 92. The predetermined external force is the maximum external force that is expected to be applied via the steering wheel 5, for example, and is determined by experimentation or the like.

The second friction face 92 of the second member 72 is provided with a second protruding portion 93 that is inserted into the second recessed portion 84. The second protruding portion 93 is provided in the middle portion of the second friction face 92 in the axial direction. In other words, the second friction face 92 is divided into two parts in the axial direction. The second protruding portion 93 has a flat rectangular shape corresponding to the second recessed portion 84 as viewed from the second direction, and fits into the second recessed portion 84. The second protruding portion 93 does not engage with the second recessed portion 84 in the second direction, but does engage therewith in the axial direction. That is to say, the second protruding portion 93 and the second recessed portion 84 are configured to allow movement of the first member 71 in the second direction relative to the second member 72, while restricting movement of the second member 72 in the axial direction. Also, the second member 72 is in contact with an inner side face of the first side wall 62 of the projecting portion 33 (see FIG. 5). This restricts movement of the second member 72 toward the biasing side.

The biasing members 73 in the present embodiment are coil springs. The biasing members 73 are mounted to the mounting protrusions 85 of the first member 71. The biasing members 73 are compressed between bottom faces of the installation holes 68 and the side face of the first member 71, and bias the first member 71 toward the biasing side. Biasing force of the biasing members 73 is set such that movement in the axial direction of the column tube 22 within the tubular portion 31, by the telescopic actuator 7, is permitted in a state in which the gap between the tubular portion 31 and the column tube 22 is filled by biasing the first member 71 towards the biasing side.

In the backlash suppression mechanism 23 configured in this manner, a situation will be supposed in which the second member 72 becomes worn due to repeated adjustment of the telescopic position, for example, and a gap is formed between the second member 72 and the column tube 22, or between the first member 71 and the second member 72. In this case, the first member 71 is biased by the biasing members 73 and moves toward the biasing side. Now, the first friction face 82 and the second friction face 92 are inclined away from the column tube 22 the farther toward the biasing side, and accordingly the second member 72 also would move toward the biasing side. However, as described above, the second member 72 comes into contact with the inner side face of the first side wall 62 and accordingly is restricted from moving toward the biasing side, and hence moves to the inward side. This fills the gap that has been formed, and accordingly the gap between the tubular portion 31 of the housing 21 and the column tube 22 is maintained in a filled state.

Next, assembly of the backlash suppression mechanism 23 will be described. First, the first member 71 is inserted into the projecting portion 33 of the housing 21 through the insertion hole 67, and also the mounting protrusions 85 are inserted into the installation holes 68, thereby compressing the biasing members 73. The biasing members 73 may be attached to the mounting protrusions 85 of the first member 71 or may be disposed within the installation holes 68. At this time, the first member 71 is biased toward the biasing side by the biasing member 73, but a portion of the inner peripheral face of the insertion hole 67 protrudes to the inward side beyond the inner bottom face 65, and accordingly the first member 71 does not readily fly out from the insertion hole 67.

Next, the second member 72 is disposed so as to be overlaid on top of the first member 71 through the opening at the rear-side end portion of the tubular portion 31. Thereafter, the column tube 22 is inserted through the opening at the rear-side end portion of the tubular portion 31, to realize the state in which the gap between the tubular portion 31 of the housing 21 and the column tube 22 is filled, thereby assembling the backlash suppression mechanism 23.

### (Functions and Effects of Present Embodiment)

Next, functions and effects of the present embodiment will be described.
(1) The steering column device 1 includes the backlash suppression mechanism 23, and accordingly the gap between the tubular portion 31 of the housing 21 and the column tube 22 is in a state of being filled as described above. Here, a situation will be supposed in which a force that presses the second member 72 to the outward side acts on the second member 72 from the column tube 22 via the steering wheel 5 due to operation by a driver, for example. In this case, the first member 71 is biased toward the counter-biasing side by the second member 72 via the first friction face 82 and the second friction face 92, but the movement of the first member 71 toward the counter-biasing side is restricted by the frictional force acting between the first friction face 82 and the second friction face 92. Thus, no gap is formed between the tubular portion 31 of the housing 21 and the column tube 22, and backlash of the column tube 22 is suppressed.

In this way, the backlash suppression mechanism 23 utilizes the frictional force between the first friction face 82 and the second friction face 92 to suppress backlash of the column tube 22. Accordingly, the force in the radial direction acting on the column tube 22 can be reduced, as compared to a case in which the column tube 22 is pressed down by a disc spring, for example. Thus, sliding resistance, when the column tube 22 moves in the axial direction within the housing 21, can be reduced, and the telescopic position of the steering wheel 5 can be easily adjusted. This enables use of a telescopic motor 51 having small output as the drive source of the telescopic motor 51, for example. Note that even when the driver applies force to the steering wheel 5 in the axial direction, self-locking of the reducer 52 restricts rotation thereof, thereby restricting the telescoping of the steering column 3, and accordingly the telescopic position is not changed unintentionally.

(2) The outer bottom face 81 of the first member 71 is provided with the first protruding portions 83 that protrude toward the inner bottom face 65, and also the inner bottom face 65 of the projecting portion 33 is provided with the first recessed portions 66 into which the first protruding portions 83 are inserted. The first protruding portions 83 and the first recessed portions 66 are configured to allow movement of the first member 71 toward the biasing side and also to restrict movement of the first member 71 in the axial direction.

According to the above configuration, the first protruding portions 83 are fitted into the first recessed portions 66, thereby preventing the first member 71 from slipping out in the axial direction. Accordingly, there is no need to add a separate part to prevent the first member 71 from slipping out in the axial direction, and increase in the number of parts can be suppressed.

(3) The second friction face 92 of the second member 72 is provided with the second protruding portion 93 that protrudes toward the first friction face 82, and also the first friction face 82 of the first member 71 is provided with the second recessed portion 84 into which the second protruding portion 93 is inserted. The second protruding portion 93 and the second recessed portion 84 are configured to allow movement of the first member 71 toward the biasing side and also to restrict movement of the second member 72 in the axial direction.

According to the above configuration, the second protruding portion 93 is fitted into the second recessed portion 84, thereby preventing the second member 72 from slipping out in the axial direction. Accordingly, there is no need to add a separate part to prevent the second member 72 from slipping out in the axial direction, and an increase in the number of parts can be suppressed.

(4) The projecting portion 33 includes the insertion hole 67 passing through in the second direction. The insertion hole 67 enables the first member 71 to be inserted into the projecting portion 33 from the outside, toward the counter-biasing side. In a case of disposing the first member 71 in the projecting portion 33 from the opening at the rear-side end portion of the tubular portion 31, for example, it is necessary to dispose the first member 71 in the projecting portion 33 in a state in which the biasing members 73 are compressed using a tool or the like. In this regard, in the above configuration, when the first member 71 is inserted into the inside of the projecting portion 33 toward the counter-biasing side, the biasing members 73 are pressed by the first member 71, and are thus compressed. Accordingly, the ease of assembly of the backlash suppression mechanism 23 can be improved.

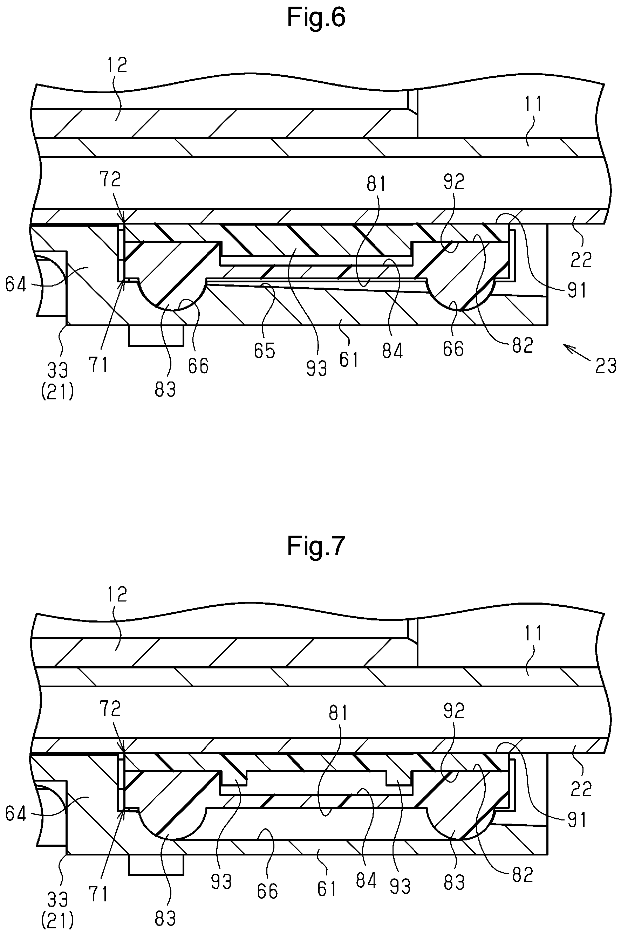

The present embodiment can be carried out modified as follows. The present embodiment and the following modifications can be carried out combined with each other as long as no technical contradiction arises.
- In the above embodiment, the projecting portion 33 does not have to include the insertion hole 67. In this case, when the backlash suppression mechanism 23 is assembled, the first member 71 is disposed inside the projecting portion 33 through the opening at the rear-side end portion of the tubular portion 31.
- In the above embodiment, the portion of the inner peripheral face of the insertion hole 67 situated on the outward side may be flush with the inner bottom face 65 or may be recessed to the outward side from the inner bottom face 65.
- In the above embodiment, the first protruding portions 83 are provided on the outer bottom face 81 of the first member 71, and the first recessed portions 66 are provided on the inner bottom face 65 of the projecting portion 33, but an arrangement may be made in which first recessed portions are provided on the outer bottom face 81, and first protruding portions are provided on the inner bottom face 65. In this case, the first protruding portions provided on the inner bottom face may be distal end portions of screws or bolts that are threaded into the bottom wall 61 so as to pass through the bottom wall 61.
- In the above embodiment, the first protruding portions 83 and the first recessed portions 66 have a semicircular shape as viewed from the second direction, but may have a rectangular shape instead, for example, and the shape thereof can be changed as appropriate.
- In the above embodiment, two of the first protruding portions 83 are provided on the outer bottom face 81 of the first member 71, but one or three or more first protruding portions 83 may be provided on the outer bottom face 81. Similarly, one or three or more first recessed portions 66 may be provided on the inner bottom face of the projecting portion 33. Also, as illustrated in FIG. 7, in a case in which two of the first protruding portions 83 are provided on the outer bottom face 81 as in the above embodiment, one first recessed portion 66 formed in the shape of a wide groove into which these two first protruding portions 83 can be inserted may be provided on the inner bottom face 65.
- In the above embodiment, the second protruding portion 93 is provided on the second friction face 92 of the second member 72, and the second recessed portion 84 is provided on the first friction face 82 of the first member 71, but an arrangement may be made in which a second recessed portion is provided on the second friction face 92 and a second protruding portion is provided on the first friction face 82.
- In the above embodiment, the second protruding portion 93 and the second recessed portion 84 have a flat rectangular shape as viewed from the second direction, but may have a semicircular shape instead, for example, and the shape thereof can be changed as appropriate.
- In the above embodiment, one second protruding portion 93 is provided on the second friction face 92, but two or more second protruding portions 93 may be provided. Similarly, the first friction face 82 may be provided with two or more second recessed portions 84. Also, as illustrated in FIG. 7, in a case in which one second recessed portion 84 formed in the shape of a wide groove is provided on the first friction face 82 as in the above embodiment, two second protruding portions 93 that are inserted into this second recessed portion 84 may be provided on the second friction face 92.
- In the above embodiment, the first protruding portions 83 and the first recessed portions 66 do not have to be provided on the inner bottom face 65 and the outer bottom face 81. In this case, the projecting portion 33 may be provided with a retaining member that comes into contact with the first member 71 from the rear side thereof. Similarly, the second protruding portion 93 and the second recessed portion 84 do not have to be provided on the first friction face 82 and the second friction face 92. In this case, the projecting portion 33 may be provided with a retaining member that comes into contact with the second member 72 from the rear side thereof.
- In the above embodiment, the backlash suppression mechanism 23 includes two biasing members 73, but may include one, or three or more, biasing members 73.
- In the above embodiment, the biasing member 73 does not have to be a coil spring, and may be a leaf spring or a disc spring, for example. Further, the biasing member 73 may be an elastic body such as rubber or the like, for example, as long as it is capable of biasing the first member 71 in toward the biasing side.
- In the above embodiment, the first member 71 and the second member 72 may be made of a metal material, for example.
- In the above embodiment, the first straight line L1 is orthogonal to the axis La, but the first straight line L1 may be oblique to the axis La. Also, the second straight line L2 may be parallel to the axis La as long as it is orthogonal to or is oblique to the first straight line L1.
- In the above-described embodiment, the steering column device 1 is configured to adjust the tilt position and the telescopic position by being electrically driven, but this is not restrictive, and a configuration may be made in which at least one of the tilt position and the telescopic position is manually adjusted. Alternatively, the steering column device 1 may be configured such that only the telescopic position can be adjusted.

Next, technical ideas that can be comprehended from the above embodiment and modifications will be additionally described below.
(Appendix 1) The first member may be configured such that, in a case in which a force that presses the second member toward the outward side acts from the column tube against the second member, movement toward the counter-biasing side is restricted by frictional force that acts between the first friction face and the second friction face.

(Appendix 2) The biasing force of the biasing member may be set such that movement of the column tube within the tubular portion in the axial direction is allowed in a state in which the gap between the tubular portion and the column tube is filled by biasing the first member toward the biasing side.

## Claims

1. A steering column device comprising:
a shaft to which a steering wheel is fixed; and
a steering column that rotatably supports the shaft, wherein
the steering column includes
a housing supported by a vehicle body,
a column tube that is accommodated in the housing so as to be movable in an axial direction, and
a backlash suppression mechanism configured to suppress backlash of the column tube within the housing,
a straight line that intersects with an axis of the column tube is a first straight line, and a straight line that intersects with the first straight line is a second straight line,
the housing includes a tubular portion in which the column tube is accommodated, and a projecting portion that projects to an outward side that is a one side, from the tubular portion along the first straight line and in which the backlash suppression mechanism is accommodated,
the projecting portion includes an inner bottom face facing in an inward side that is another side along the first straight line,
the backlash suppression mechanism includes
a first member including an outer bottom face facing the inner bottom face in a first direction that is a direction along the first straight line, and a first friction face situated on an opposite side of the outer bottom face in the first direction,
a second member including a support face that supports an outer peripheral face of the column tube, and a second friction face that is situated on an opposite side of the support face in the first direction and that also comes into contact with the first friction face, and
a biasing member that biases the first member toward a biasing side that is a one side along the second straight line, and
the first friction face and the second friction face are inclined faces that are inclined so as to be farther away from the column tube the farther toward the biasing side along the second straight line.

2. The steering column device according to claim 1, wherein:
on one of the inner bottom face and the outer bottom face is provided a first protruding portion protruding toward another, and in the other is provided a first recessed portion into which the first protruding portion is inserted; and
the first protruding portion and the first recessed portion are configured to allow movement of the first member toward the biasing side and also to restrict movement of the first member in the axial direction.

3. The steering column device according to claim 1 or 2, wherein:
on one of the first friction face and the second friction face is provided a second protruding portion protruding toward another, and in the other is provided a second recessed portion into which the second protruding portion is inserted; and
the second protruding portion and the second recessed portion are configured to allow movement of the first member toward the biasing side and also to restrict movement of the second member in the axial direction.

4. The steering column device according to claim 1 or 2, wherein:
the projecting portion includes an insertion hole passing through in a second direction that is a direction along the second straight line; and
the insertion hole enables the first member to be inserted into the projecting portion from an outside toward a counter-biasing side that is another side along the second straight line.
